Europäisches Patentamt

European Patent Office

Office européen des brevets

(19)

(11)  **EP 1 048 007 B1**

(12)  **FASCICULE DE BREVET EUROPEEN**

(45)  Date de publication et mention
de la délivrance du brevet:
**02.07.2003   Bulletin 2003/27**

(51)  Int Cl.$^7$: **G06T 7/00**

(21)  Numéro de dépôt: **99954044.6**

(86)  Numéro de dépôt international:
**PCT/FR99/02679**

(22)  Date de dépôt: **03.11.1999**

(87)  Numéro de publication internationale:
**WO 00/031687 (02.06.2000 Gazette 2000/22)**

(54)  **METHODE DE DETECTION DE STRUCTURES CHAOTIQUES DANS UN MILIEU DONNE**

VERFAHREN ZUM ERMITTELN EINER CHAOTISCHEN STRUKTUR IN EINER GEGEBENEN UMGEBUNG

METHOD FOR DETECTING CHAOTIC STRUCTURES IN A SPECIFIC ENVIRONMENT

(84)  Etats contractants désignés:
**FR GB IT NL**

(30)  Priorité:  **19.11.1998  FR 9814533**

(43)  Date de publication de la demande:
**02.11.2000   Bulletin 2000/44**

(73)  Titulaire: **Elf Exploration Production
92400 Courbevoie (FR)**

(72)  Inventeurs:
  • **KESKES,Naamen
64000 Pau (FR)**
  • **PAUGET,Fabien
64000 Pau (FR)**

(74)  Mandataire: **Levy, David et al
c/o S.A. FEDIT-LORIOT & AUTRES
CONSEILS EN PROPRIETE INDUSTRIELLE
38, Avenue Hoche
75008 Paris (FR)**

(56)  Documents cités:
**WO-A-97/13166          FR-A- 2 738 871
US-A- 4 852 004          US-A- 5 473 747
US-A- 5 572 565**

  • **MORRIS D: "COHERENCE CUBE TECHNOLOGY
ADDS GEOLOGIC INSIGHT TO 3-D DATA"
WORLD OIL, vol. 218, no. 5, 1 mai 1997
(1997-05-01), page 80, 82, 84 XP000703907 ISSN:
0043-8790**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne une méthode de détection de structures chaotiques dans un milieu donné.

Une structure chaotique est une région tridimensionnelle d'un milieu à l'intérieur de laquelle les variations d'intensité entre des pixels voisins d'une image sont particulièrement anarchiques. De telles régions, considérées comme étant chaotiques, peuvent apparaître dans toute l'imagerie tridimensionnelle, comme par exemple dans l'imagerie médicale, l'imagerie sismique ; dans le cas de l'imagerie sismique, il s'agit de complexes chenalisants.

On connaît déjà d'après le document WO 97/13166 de l'art antérieur un procédé pour détecter et localiser des structures dans des formations souterraines, ce procédé consistant à: représenter les signaux par un bloc image d'axes x,y,z; définir une fenêtre d'analyse tridimensionnelle et centrée sur un point image du bloc; calculer la corrélation entre des régions voisines pour mesurer leur similarité; déterminer des structures à la base de ces mesures.

Lorsqu'on visualise un bloc sismique dans une direction donnée, la zone ou complexe chenalisant présente des mouvements particulièrement désorganisés. Pour détecter ou mettre en valeur le complexe chenalisant, il a été proposé de calculer en tout point l'erreur du flux optique selon un modèle dans lequel le champ de vecteurs vitesse est supposé constant localement. Lorsqu'on met en oeuvre la méthode de détection du complexe chenalisant mentionné ci-dessus, on s'aperçoit que les points situés à l'extérieur du complexe chenalisant correspondent bien au modèle utilisé car localement ils subissent tous à peu près le même mouvement. Dans ce cas, l'erreur du flux optique, qui représente l'écart entre la vitesse obtenue et la vitesse idéale qui est une vitesse correspondant à une erreur nulle, est faible. A l'opposé, les points situés à l'intérieur du complexe chenalisant ont des mouvements très différents localement et l'hypothèse d'un champ uniforme devient alors inadéquate. En conséquence, l'erreur du flux optique, calculée dans un tel complexe, est nettement plus importante. Un tel comportement ou une telle différence entre les erreurs de flux calculées permet de distinguer très simplement les complexes chenalisants sous la forme de régions tridimensionnelles. Mais le calcul du flux optique et l'erreur monodirectionnelle qui en découle restent tributaires de la direction de visualisation qui est arbitrairement choisie. Pour obtenir une détection des complexes chenalisants plus robuste, il serait possible d'envisager de calculer l'erreur du flux dans un grand nombre de directions. Toutefois, il ne serait pas concevable de moyenner les erreurs de flux calculées en présentant une sismique dans toutes les directions en raison d'un temps de calcul prohibitif.

On donne ci-dessous, la manière de calculer l'erreur du flux monodirectionnelle.

Soit un bloc d'images sismiques dont les axes sont x, y, z avec une direction de visualisation qui est confondue avec l'axe z, ladite direction de visualisation étant définie par le vecteur transposé $\Delta = [001]^T$ et la composante du déplacement local U ou flux optique dans la direction $\Delta$ est unitaire. Le modèle à champ de vecteurs vitesse constant estime le vecteur transposé $U = [u, v, 1]^T$ en minimisant la somme W ci-après par la méthode des moindres carrés :

$$W = \sum_{i \in F} \left( Ex_i u + Ey_i v + Ez_i \right)^2 \qquad (1)$$

dans laquelle :

F est une fenêtre tridimensionnelle d'axes x, y, z, de dimensions N*N*N, N étant le nombre de pixels de l'image selon chacun des trois axes x, y, z.

$Ex_i$, $Ey_i$, $Ez_i$ sont les dérivées partielles de l'intensité lumineuse au point i suivant les axes x, y et z.

Les composantes u et v sont calculées par les formules suivantes :

$$u = \frac{S_{xy} S_{yz} - S_{xz} S_{yy}}{S_{xx} S_{yy} - S_{xy}^2}$$

$$\qquad (2)$$

$$v = \frac{S_{xy} S_{xz} - S_{yz} S_{xx}}{S_{xx} S_{yy} - S_{xy}^2}$$

avec :

$$Sxx = \sum_{i \in F} Ex_i^2$$

$$Syy = \sum_{i \in F} Ey_i^2$$

$$Sxz = \sum_{i \in F} Ex_i Ez_i \qquad (3)$$

$$Sxy = \sum_{i \in F} Ex_i Ey_i$$

$$Syz = \sum_{i \in F} Ey_i Ez_i$$

Dans le cas idéal où les déplacements des pixels situés à l'intérieur de la fenêtre F sont identiques, c'est-à-dire lorsque cela répond parfaitement au modèle à champ constant, la somme W est nulle. Dans les cas perturbés des complexes chenalisants, les déplacements des pixels situés à l'intérieur de la fenêtre F sont différents et alors la somme W est non nulle et elle est même très importante.

La présente invention a pour but, d'une part, de remédier aux inconvénients précités qui résident dans le fait que le calcul de l'erreur de flux est tributaire de la direction de visualisation et que le calcul de l'erreur dans toutes les directions de la sismique serait prohibitif, et d'autre part, de proposer une méthode qui permet de détecter des structures chaotiques de façon sûre et avec un temps de calcul considérablement réduit.

La présente invention a pour objet une méthode de détection de structures chaotiques dans un milieu donné, du type consistant à :

a) représenter le milieu donné au moyen d'au moins une séquence d'images d'axes x et y et ordonnées suivant un axe z perpendiculaire de manière à constituer un bloc image d'axes x, y et z,

b) définir une fenêtre d'analyse F tridimensionnelle d'axes parallèles aux axes x, y et z,

c) centrer la fenêtre F sur un point image du bloc,

d) calculer les composantes selon les axes x, y et z du vecteur gradient intensité lumineuse E en tout point de la fenêtre F,

caractérisée en ce qu'elle consiste en outre à :

e) calculer une matrice élémentaire M en tout point de la fenêtre F et représentant le produit direct $ExE^T$ où $E^T$ est le vecteur transposé du vecteur gradient E,

f) effectuer la somme des matrices élémentaires M pour tous les points de la fenêtre F, de manière à obtenir une matrice somme A qui est affectée audit point image sur lequel est centrée la fenêtre,

g) diagonaliser ladite matrice somme A pour déterminer ses valeurs propres $\lambda_1, \lambda_2, \lambda_3$, chaque valeur propre correspondant à un vecteur propre,

h) quantifier au point image, centre de la fenêtre, l'erreur globale minimale du vecteur flux optique U selon une direction orientée de vecteur unitaire D, en fonction desdites valeurs propres $\lambda_1, \lambda_2$ et $\lambda_3$, et avec la contrainte $U^T$ x D = 1 où $U^T$ est le vecteur transposé du vecteur U,

i) éliminer la contribution de la valeur propre la plus grande dans la quantification de l'erreur du flux optique de manière à obtenir une quantification d'une erreur secondaire du flux optique en fonction des deux valeurs propres restantes pour ladite direction orientée ;

j) définir une erreur multidirectionnelle en intégrant l'erreur secondaire dans le plan défini par les vecteurs propres correspondant aux valeurs propres restantes,

k) affecter l'erreur multidirectionnelle au point image sur lequel est centrée la fenêtre F, et

l) calculer les erreurs multidirectionnelles affectées à tous les points images du bloc image.

Un avantage de la présente invention réside dans le fait que l'erreur de flux calculée est multidirectionnelle c'est-à-dire qu'elle est calculée dans toutes les directions d'un plan défini par les vecteurs propres correspondant aux valeurs propres restantes.

Selon une autre caractéristique de la présente invention, il est seulement nécessaire de déterminer la formule représentative de l'erreur multidirectionnelle affectée à un point image puis de l'appliquer pour les valeurs propres de chaque matrice diagonalisée correspondant à chacun des autres points image du bloc analysé.

De ce fait, le temps de calcul pour l'ensemble des points image est considérablement réduit, ce qui permet d'analyser des blocs d'images sismiques par exemple, de plus en plus grands et de plus en plus complexes dans des temps raisonnables comparés à ceux qui sont nécessaires pour la mise en oeuvre des méthodes de l'art antérieur.

Selon une autre caractéristique, les erreurs multidirectionnelles sont sélectionnées en fonction d'un seuil qui peut être déterminé ou défini de proche en proche, de sorte qu'après avoir défini un seuil approprié, les valeurs des erreurs multidirectionnelles inférieures audit seuil approprié sont éliminées. Ainsi, les limites de l'enveloppe déterminée par les points correspondant à une erreur multidirectionnelle égale au seuil ajusté, correspondront aux limites du complexe chenalisant.

D'autres avantages et caractéristiques apparaîtront plus clairement à la lecture de la description d'une application de la méthode selon l'invention à un bloc d'images sismiques, ainsi que des dessins annexés sur lesquels :

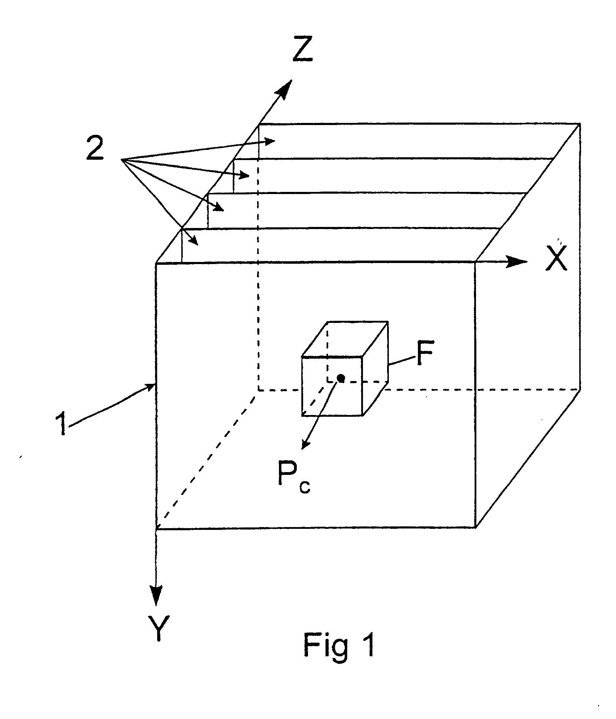

- la figure 1 est une représentation schématique d'un bloc d'images sismiques,
- la figure 2 représente une image sismique du bloc de la figure 1 et comprenant la section par le plan de l'image d'un complexe chenalisant à détecter avec la méthode selon l'invention ;
- la figure 3 représente l'erreur multidirectionnelle de flux supérieure à un seuil et calculée à partir de l'image de la figure 2 ;
- la figure 4 est une représentation en 3D du complexe chenalisant contenu dans le bloc d'images sismiques de la figure 1 après mise en oeuvre de la méthode selon l'invention.

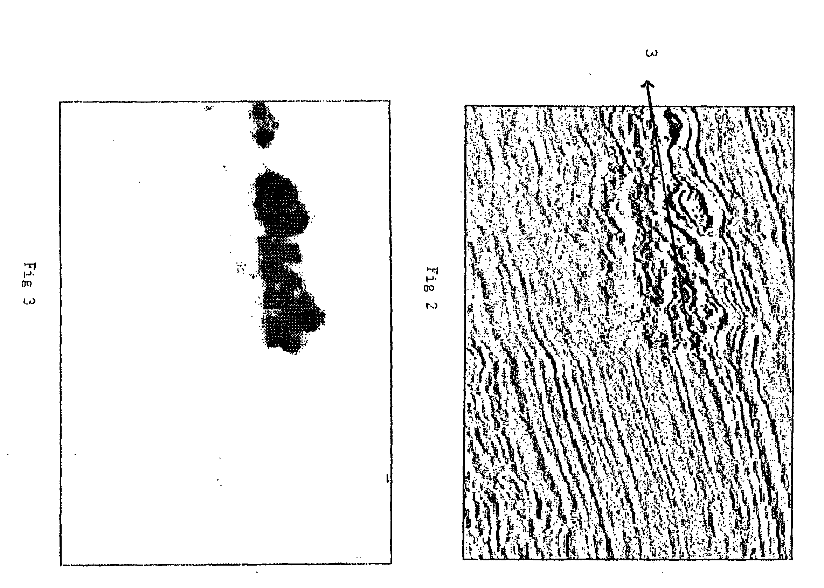

La méthode. selon l'invention, appliquée à titre d'exemple à la détection de complexes chenalisants en sismique, consiste à constituer un bloc d'images sismiques 1 représentatif d'un milieu exploré. Le bloc 1 comprend une séquence d'images sismiques 2 d'axes x et y et ordonnées suivant une direction z orthogonale aux axes x et y. La séquence d'images 2 représente la succession des horizons sismiques présents dans le milieu. Une image sismique 2 du bloc 1 est représentée sur la figure 2. Une interprétation de l'image sismique 2 permet de constater la présence d'une zone 3 d'un complexe chenalisant qu'il est nécessaire de détecter dans le bloc 1 et de représenter dans un espace à trois dimensions. Les autres images 2 du bloc 1 comprennent également des zones du même complexe chenalisant 3.

On définit une fenêtre d'analyse F tridimensionnelle d'axes parallèles aux axes x, y et z du bloc 1 et de dimensions N*N*N pixels qui est centrée sur un point image $P_C$ du bloc 1.

On calcule les composantes suivant les axes x, y et z du vecteur gradient d'intensité lumineuse E en tout point i de ladite fenêtre d'analyse F. Puis on effectue le produit direct $ExE^T$, $E^T$ étant le vecteur transposé du vecteur E. Le résultat de ce produit est une matrice élémentaire M à trois lignes et trois colonnes.

Dans une autre étape, on effectue la somme des matrices élémentaires M pour tous les points i de la fenêtre d'analyse F de manière à obtenir une matrice somme A qui peut être écrite sous la forme :

$$A = \begin{bmatrix} \sum_{i \in F} Ex_i^2 & \sum_{i \in F} Ex_i Ey_i & \sum_{i \in F} Ex_i Ez_i \\ \sum_{i \in F} Ex_i Ey_i & \sum_{i \in F} Ey_i^2 & \sum_{i \in F} Ey_i Ez_i \\ \sum_{i \in F} Ex_i Ez_i & \sum_{i \in F} Ey_i Ez_i & \sum_{i \in F} Ez_i^2 \end{bmatrix}$$

dans laquelle : $Ex_i$, $Ey_i$ et $Ez_i$ sont les composantes du vecteur gradient E selon respectivement les axes x, y et z au point i.

On définit une fonction énergie J par la relation :

$$J = \sum_{i \in F} \left( Ex_i u + Ey_i v \div Ez_i w \right)^2 \qquad (5)$$

dans laquelle u, v et w sont les composantes du flux optique U au centre de la fenêtre F.

L'énergie J, sous forme matricielle, s'écrit :

$$J = U^T AU = \begin{bmatrix} u, v, w \end{bmatrix} \begin{bmatrix} \sum_{i \in F} Ex_i^2 & \sum_{i \in F} Ex_i Ey_i & \sum_{i \in F} Ex_i Ez_i \\ \sum_{i \in F} Ex_i Ey_i & \sum_{i \in F} Ey_i^2 & \sum_{i \in F} Ey_i Ez_i \\ \sum_{i \in F} Ex_i Ez_i & \sum_{i \in F} Ey_i Ez_i & \sum_{i \in F} Ez_i^2 \end{bmatrix} \begin{bmatrix} u \\ v \\ w \end{bmatrix} \qquad (6)$$

dans laquelle :

$U^T$ est le vecteur transposé du vecteur U,
A est la matrice somme.

Le flux optique U recherché dans une direction quelconque de visualisation, de vecteur unitaire D, doit minimiser l'énergie J sous la contrainte $U^T D = 1$ car la composante du vecteur U dans la direction de visualisation est unitaire.

En diagonalisant la matrice somme centrale A de l'expression précédente, on obtient trois valeurs propres $\lambda_1$, $\lambda_2$ et $\lambda_3$ et une base $V_p$ de vecteurs propres. Dans cette base $V_p$, le vecteur déplacement ou flux optique U est défini par $[u_1, u_2, u_3]^T$ et la direction de visualisation est définie par $[x_1, x_2, x_3]^T$. Comme la composante du vecteur U dans la direction de visualisation est unitaire puisqu'il s'agit de la distance inter-images, il s'ensuit que la contrainte qui est définie par la relation $U^T D = 1$ conduit à l'expression :

$$x_1 u_1 + x_2 u_2 + x_3 u_3 = 1 \qquad (7)$$

Dans la base $V_p$, l'énergie J s'écrit :

$$J = \begin{bmatrix} u_1, u_2, u_3 \end{bmatrix} \begin{bmatrix} \lambda 1 & 0 & 0 \\ 0 & \lambda 2 & 0 \\ 0 & 0 & \lambda 3 \end{bmatrix} \begin{bmatrix} u1 \\ u2 \\ u3 \end{bmatrix} \qquad (8)$$

La minimisation de l'énergie J, par exemple par le procédé des moindres carrés et sous la contrainte $U^T D = 1$ s'effectue en utilisant un opérateur de Lagrange $\alpha$. Cela revient à minimiser l'expression suivante :

$$J = u_1^2 \lambda_1 + u_2^2 \lambda_2 + u_3^2 \lambda_3 + \alpha(x_1 u_1 + x_2 u_2 + x_3 u_3 - 1) \qquad (9)$$

La minimisation consiste donc à mettre à zéro les dérivées partielles de J par rapport aux inconnues $u_1$, $u_2$, $u_3$ et $\alpha$ et à résoudre le système correspondant qui s'écrit :

$$\begin{cases} \dfrac{\partial J}{\partial \alpha} = x_1 u_1 + x_2 u_2 + x_3 u_3 - 1 = 0 \\[2mm] \dfrac{\partial J}{\partial u_1} = 2u_1 \lambda_1 + \alpha x_1 = 0 \\[2mm] \dfrac{\partial J}{\partial u_2} = 2u_2 \lambda_2 + \alpha x_2 = 0 \\[2mm] \dfrac{\partial J}{\partial u_3} = 2u_3 \lambda_3 + \alpha x_3 = 0 \end{cases}$$

De cette manière et en remplaçant les variables $u_1$, $u_2$ et $u_3$ par des expressions en fonction des valeurs propres $\lambda_1$, $\lambda_2$ et $\lambda_3$, on obtient l'expression de J qui quantifie l'erreur de flux dans la direction de visualisation :

$$J = \frac{\lambda_1 \lambda_2 \lambda_3}{\lambda_2 \lambda_3 x_1^2 + \lambda_1 \lambda_3 x_2^2 + \lambda_1 \lambda_2 x_3^2} = \frac{1}{\dfrac{x_1^2}{\lambda_1} + \dfrac{x_2^2}{\lambda_2} + \dfrac{x_3^2}{\lambda_3}} \tag{10}$$

La plus grande des valeurs propres de la matrice A, par exemple $\lambda_1$, représente la variation d'intensité dans la direction de succession des horizons sismiques. La valeur propre $\lambda_1$ est, de ce fait, aussi importante sinon plus au niveau des horizons de forte intensité qu'à l'intérieur des complexes chenalisants. Or, si on se reporte à l'expression de J qui quantifie l'erreur de flux dans la direction de visualisation, on constate que plus $\lambda_1$ est grand, plus l'erreur de flux dans la direction de visualisation augmente. Dans ces conditions, si on tenait compte de la plus grande valeur $\lambda_1$, on s'apercevrait que le contraste d'erreur entre le complexe chenalisant et le reste de la sismique serait fortement atténué et la détection du complexe chenalisant serait alors très difficile à effectuer. Selon l'invention, on élimine la contribution de la plus grande des valeurs propres et on calcule l'erreur secondaire de flux dans des directions où la valeur propre $\lambda_1$ n'a plus d'effet, c'est-à-dire dans les directions telles que $x_1$, qui est la composante de D sur l'axe principal défini par $\lambda_1$, soit nulle. Dans ces conditions et comme D est un vecteur unitaire, il est possible d'établir une relation entre $x_2$ et $x_3$, du type :

$$x_3^2 = 1 - x_2^2 \text{ avec } x_1^2 + x_2^2 + x_3^2 = 1 \text{ et } x_1 = 0 \tag{11}$$

Ainsi, sous la condition $x_1 = 0$, l'erreur de flux secondaire J' peut s'écrire sous la forme d'une fonction monoparamétrée définie dans l'intervalle [-1, 1] :

$$J'(x_2) = \frac{\lambda_2 \lambda_3}{\lambda_3 x_2^2 + \lambda_2 (1 - x_2^2)} \tag{12}$$

Pour définir une erreur multidirectionnelle, il est alors nécessaire d'intégrer l'erreur secondaire de flux dans le plan défini par les vecteurs propres correspondant aux valeurs propres restantes $\lambda_2$ et $\lambda_3$.

En effet, étant donné que $J'(x_2 = J'(-x_2)$, le calcul de l'erreur de flux dans toutes les directions telles que $x_1 = 0$ s'effectue par la résolution de l'intégrale suivante :

$$SJ = 2 \int_0^1 \frac{\lambda_2 \lambda_3}{\lambda_3 x_2^2 + \lambda_2 (1 - x_2^2)} dx_2 \tag{13}$$

Le résultat de l'intégration conduit à l'expression suivante :

$$SJ = \lambda_3 \sqrt{\frac{\lambda_2}{\lambda_2 - \lambda_3}} \ln \left( \frac{1 + \sqrt{\frac{\lambda_2 - \lambda_3}{\lambda_2}}}{1 - \sqrt{\frac{\lambda_2 - \lambda_3}{\lambda_2}}} \right) \qquad (14)$$

La valeur de SJ représente l'erreur de flux multidirectionnelle pour le point image sur lequel est centrée la fenêtre d'analyse dont la taille est par exemple 5*5*5 c'est-à-dire qu'elle comprend 125 pixels.

Après quoi, on choisit un autre point image $P_{C2}$ du bloc 1, la fenêtre d'analyse étant centrée sur ledit point $P_{C2}$. Ensuite et pour ce point image $P_{C2}$, on calcule les composantes du vecteur gradient d'intensité lumineuse à partir desquelles sont calculées les valeurs propres $\lambda'_1$, $\lambda'_2$ et $\lambda'_3$ de la matrice somme A. Une fois que ces valeurs propres sont calculées et après avoir éliminé la plus grande de ces valeurs propres, $\lambda'_1$ par exemple, on applique la formule SJ en remplaçant les valeurs propres $\lambda_2$ et $\lambda_3$ par les nouvelles valeurs propres $\lambda'_2$ et $\lambda'_3$.

De proche en proche, on analyse, de la manière indiquée précédemment, chacun des points images du bloc 1.

De manière à bien délimiter les limites du complexe chenalisant, les valeurs de l'erreur de flux multidirectionnelle SJ sont seuillées pour ne retenir que les valeurs qui sont supérieures à un seuil qui peut être soit prédéterminé soit défini de proche en proche jusqu'à ce qu'un seuil approprié soit trouvé et qui corresponde à une différence significative entre l'erreur de flux multidirectionnelle correspondant à des points situés en dehors du complexe chenalisant et l'erreur de flux multidirectionnelle correspondant à des points situés à l'intérieur du complexe chenalisant. Sur la figure 3, il est représenté l'erreur multidirectionnelle seuillée correspondant à la zone 3 du chenal du bloc image qui se trouve dans le plan de l'image sismique 2.

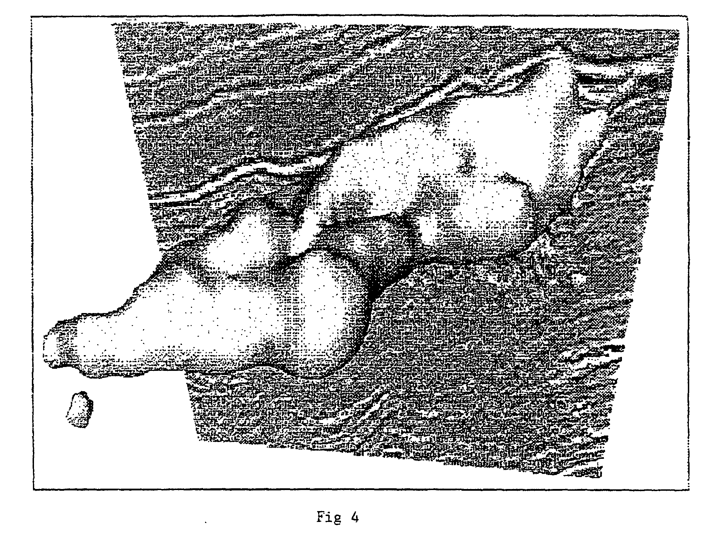

Dans une dernière étape, les points retenus sont visualisés en trois dimensions pour obtenir un volume représentant le complexe chenalisant, ainsi que cela est représenté sur la figure 4.

**Revendications**

**1.** Méthode de détection de structures chaotiques dans un milieu donné, du type consistant à :

a) représenter le milieu donné au moyen d'au moins une séquence d'images d'axes x et y et ordonnées suivant un axe z perpendiculaire de manière à constituer un bloc image d'axes x, y et z,

b) définir une fenêtre d'analyse F tridimensionnelle d'axes parallèles aux axes x, y et z,

c) centrer la fenêtre F sur un point image du bloc,

d) calculer les composantes selon les axes x, y et z du vecteur gradient intensité lumineuse E en tout point de la fenêtre F,

**caractérisée en ce qu'**elle consiste en outre à :

e) calculer une matrice élémentaire M en tout point de la fenêtre F et représentant le produit direct $E \times E^T$ où $E^T$ est le vecteur transposé du vecteur gradient E,

f) effectuer la somme des matrices élémentaires M pour tous les points de la fenêtre F, de manière à obtenir une matrice somme A qui est affectée audit point image sur lequel est centrée la fenêtre,

g) diagonaliser ladite matrice somme A pour déterminer ses valeurs propres $\lambda_1, \lambda_2, \lambda_3$, chaque valeur propre correspondant à un vecteur propre,

h) quantifier au point image, centre de la fenêtre, l'erreur globale minimale du vecteur flux optique U selon une direction orientée de vecteur unitaire D, en fonction desdites valeurs propres $\lambda_1, \lambda_2$ et $\lambda_3$, et avec la contrainte $U^T \times D = 1$ où $U^T$ est le vecteur transposé du vecteur U,

i) éliminer la contribution de la valeur propre la plus grande dans la quantification de l'erreur du flux optique de manière à obtenir une quantification d'une erreur secondaire du flux optique en fonction des deux valeurs propres restantes pour ladite direction orientée ;

j) définir une erreur multidirectionnelle en intégrant l'erreur secondaire dans le plan défini par les vecteurs propres correspondant aux valeurs propres restantes,

k) affecter l'erreur multidirectionnelle au point image sur lequel est centrée la fenêtre F, et

1) calculer les erreurs multidirectionnelles affectées à tous les points images du bloc image.

**2.** Méthode selon la revendication 1, **caractérisée en ce que** l'erreur multidirectionnelle affectée à un point image est donnée par la formule :

$$SJ = \lambda_3 \sqrt{\frac{\lambda_2}{\lambda_2 - \lambda_3}} \, ln \left( \frac{1 + \sqrt{\dfrac{\lambda_2 - \lambda_3}{\lambda_2}}}{1 - \sqrt{\dfrac{\lambda_2 - \lambda_3}{\lambda_2}}} \right) \qquad (14)$$

dans laquelle $\lambda_2$ et $\lambda_3$, sont les valeurs propres les plus faibles de la matrice diagonalisée correspondant audit point image.

**3.** Méthode selon la revendication 2, **caractérisée en ce qu'**on effectue pour chaque point image les étapes c) à g) fournissant les valeurs propres de la matrice diagonalisée et on applique la formule de calcul d'erreur multidirectionnelle après avoir éliminé la plus grande des valeurs propres.

**4.** Méthode selon une des revendications précédentes, **caractérisée en ce que** chaque erreur de flux multidirectionnelle est seuillée en fonction d'un seuil prédéterminé ou élaboré par des approches successives.

**5.** Méthode selon une des revendications 1 à 4, **caractérisée en ce qu'**elle est appliquée à un bloc constitué par une séquence d'images sismiques pour détecter des complexes chenalisants.

**Patentansprüche**

**1.** Verfahren zur Erfassung chaotischer Strukturen in einem gegebenen Milieu, des Typs, der darin besteht:

   a) das gegebene Milieu wenigstens mittels einer Sequenz von Bildern mit Achsen x und y und Ordinaten längs einer hierzu senkrechten z-Achse zu repräsentieren, um einen Bildblock mit Achsen x, y und z zu bilden,
   b) ein dreidimensionales Analysefenster F mit zu den Achsen x, y und z parallelen Achsen zu definieren,
   c) das Fenster F auf einem Bildpunkt des Blocks zu zentrieren,
   d) die Komponenten des Lichtstärken-Gradientenvektors E längs der Achsen x, y und z an jedem Punkt des Fensters F zu berechnen,
   **dadurch gekennzeichnet, daß** es außerdem darin besteht:
   e) an jedem Punkt des Fensters F eine Elementarmatrix M zu berechnen, die das direkte Produkt $E \times E^T$ repräsentiert, wobei $E^T$ der transponierte Vektor des Gradientenvektors E ist,
   f) die Summe der Elementarmatrizen M für alle Punkte des Fensters in der Weise zu bilden, daß eine Summenmatrix A erhalten wird, die dem Bildpunkt zugewiesen ist, auf den das Fenster zentriert ist,
   g) die Summenmatrix A zu diagonalisieren, um ihre Eigenwerte $\lambda_1, \lambda_2, \lambda_3$ zu bestimmen, wobei jeder Eigenwert einem Eigenvektor entspricht,
   h) in dem Bildpunkt, der das Zentrum des Fensters bildet, den minimalen globalen Fehler des optischen Flußvektors U in einer Richtung des unitären Vektors D in Abhängigkeit von den Eigenwerten $\lambda_1$, $\lambda_2$ und $\lambda_3$ unter der Bedingung $U^T \times D = 1$ zu quantifizieren, wobei $U^T$ der transponierte Vektor des Vektors U ist,
   i) den Beitrag des größten Eigenvektors zu der Quantifizierung des Fehlers des optischen Flusses zu beseitigen, derart, daß eine Quantifizierung eines sekundären Fehlers des optischen Flusses in Abhängigkeit von zwei für die Richtung verbleibenden Eigenwerten erhalten wird;
   j) einen multidirektionalen Fehler zu definieren, indem der sekundäre Fehler in der Ebene, die durch die den verbleibenden Eigenwerten entsprechenden Eigenvektoren definiert ist, integriert wird,
   k) den mehrdirektionalen Fehler dem Bildpunkt zuzuweisen, auf den das Fenster F zentriert ist, und
   l) die multidirektionalen Fehler, die allen Bildpunkten des Bildblocks zugewiesen sind, zu berechnen.

**2.** Verfahren nach Anspruch 1, **dadurch gekennzeichnet, daß** der multidirektionale Fehler, der einem Bildpunkt zugewiesen ist, durch die folgende Formel gegeben ist:

$$SJ = \lambda_3 \sqrt{\frac{\lambda_2}{\lambda_2 - \lambda_3}} \ln \left( \frac{1 + \sqrt{\frac{\lambda_2 - \lambda_3}{\lambda_2}}}{1 - \sqrt{\frac{\lambda_2 - \lambda_3}{\lambda_2}}} \right) \quad (14)$$

worin $\lambda_2$ und $\lambda_3$ die kleinsten Eigenwerte der dem Bildpunkt entsprechenden diagonalisierten Matrix sind.

**3.** Verfahren nach Anspruch 2, **dadurch gekennzeichnet, daß** für jeden Bildpunkt die Schritte c) bis g) ausgeführt werden, was die Eigenwerte der diagonalisierten Matrix ergibt, und daß die Formel für die Berechnung des multidirektionalen Fehlers angewendet wird, nachdem der größte der Eigenwerte entfernt worden ist.

**4.** Verfahren nach einem der vorhergehenden Ansprüche, **dadurch gekennzeichnet, daß** jeder multidirektionale Flußfehler in Abhängigkeit von einem vorgegebenen oder durch sukzessive Annäherungen erstellten Schwellenwert mit dem Schwellenwert verglichen wird.

**5.** Verfahren nach einem der Ansprüche 1 bis 4, **dadurch gekennzeichnet, daß** es auf einen Block angewendet wird, der durch eine Folge seismischer Bilder gebildet ist, um Rinnenkomplexe zu erfassen.

## Claims

**1.** Method of detecting chaotic structures in a given medium, of the type consisting in:

a) representing the given medium by means of at least one sequence of images with axes x and y and arranged along a perpendicular axis z in such a way as to construct an image block with axes x, y and z,
b) defining a three-dimensional analysis window F with axes parallel to the axes x, y and z,
c) centering the window F on an image point of the block,
d) calculating the components along the x, y and z axes of the light intensity gradient vector E at every point of the window F,
**characterized in that** it furthermore consists in:
e) calculating an elementary matrix M at every point of the window F and representing the direct product $E \times E^T$ where $E^T$ is the transpose of the gradient vector E,
f) summing the elementary matrices M for all the points of the window F, in such a way as to obtain a sum matrix A which is assigned to the said image point on which the window is centered,
g) diagonalizing the said sum matrix A so as to determine its eigenvalues $\lambda_1$, $\lambda_2$, $\lambda_3$, each eigenvalue corresponding to an eigenvector,
h) quantifying, at the image point, centre of the window, the minimum global error in the optical flux vector U in an oriented direction with unit vector D, as a function of the said eigenvalues $\lambda_1$, $\lambda_2$ and $\lambda_3$ with the constraint $U^T \times D = 1$ where $U^T$ is the transpose of the vector U,
i) eliminating the contribution of the largest eigenvalue in the quantification of the error in the optical flux in such a way as to obtain a quantification of a secondary error in the optical flux as a function of the two remaining eigenvalues for the said oriented direction;
j) defining a multidirectional error by integrating the secondary error in the plane defined by the eigenvectors corresponding to the remaining eigenvalues,
k) assigning the multidirectional error to the image point on which the window F is centered, and
1) calculating the multidirectional errors assigned to all the image points of the image block.

**2.** Method according to Claim 1, **characterized in that** the multidirectional error assigned to an image point is given by the formula:

$$SJ = \lambda_3 \sqrt{\frac{\lambda_2}{\lambda_2 - \lambda_3}} \ln \left( \frac{1 + \sqrt{\frac{\lambda_2 - \lambda_3}{\lambda_2}}}{1 - \sqrt{\frac{\lambda_2 - \lambda_3}{\lambda_2}}} \right) \qquad (14)$$

in which $\lambda_2$ and $\lambda_3$ are the smallest eigenvalues of the diagonalized matrix corresponding to the said image point.

3. Method according to Claim 2, **characterized in that** steps c) to g) yielding the eigenvalues of the diagonalized matrix are performed for each image point, and the formula for calculating the multidirectional error is applied after having eliminated the largest of the eigenvalues.

4. Method according to one of the preceding claims, **characterized in that** each multidirectional flux error is thresheld as a function of a threshold which is predetermined or computed by successive approximations.

5. Method according to one of Claims 1 to 4, **characterized in that** it is applied to a block made up of a sequence of seismic images so as to detect channel complexes.

Fig 1

Fig 2

Fig 3

Fig 4